(19) Europäisches Patentamt / European Patent Office / Office européen des brevets

(11) **EP 2 947 766 A1**

(12) **EUROPÄISCHE PATENTANMELDUNG**

(43) Veröffentlichungstag:
25.11.2015 Patentblatt 2015/48

(51) Int Cl.:
*H02P 27/16* (2006.01)  *H02M 5/27* (2006.01)
*H02M 5/293* (2006.01)  *H05B 6/06* (2006.01)

(21) Anmeldenummer: 14168824.2

(22) Anmeldetag: 19.05.2014

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME

(71) Anmelder: Siemens Aktiengesellschaft
80333 München (DE)

(72) Erfinder:
• Döbbeler, Arno
  91074 Herzogenaurach (DE)
• Hörger, Wolfgang
  91353 Hausen (DE)
• Knaak, Hans-Joachim
  91054 Erlangen (DE)
• Pieschel, Martin
  90473 Nürnberg (DE)
• Pinkwart, Jonas
  90768 Fürth (DE)

(54) **Stromversorgung für eine nichtlineare Last mit Multilevel-Matrixumrichtern**

(57) Eine Stromversorgungseinrichtung (1) für eine nichtlineare Last (2) weist eine Mehrzahl an Umrichtereinheiten (4) auf. Die Umrichtereinheiten (4) weisen jeweils mehrere Hauptmodule (5) auf. Die Hauptmodule (5) weisen jeweils einen Eingangsanschluss (6) auf, der jeweils mit einer Phase eines mehrphasigen Drehstromnetzes (3) verbunden ist. Die Umrichtereinheiten (4) weisen jeweils einen gemeinsamen Sternpunkt (7) auf, der einerseits mit einem jeweiligen Ausgang (8) der Hauptmodule (5) der jeweiligen Umrichtereinheit (4) und andererseits über einen Ausgangsanschluss (9) der jeweiligen Umrichtereinheit (4) mit der nichtlinearen Last (2) verbunden ist. Die Hauptmodule (5) weisen jeweils eine Reihenschaltung einer Koppelinduktivität (10) und mehrerer Submodule (11) auf. Die Submodule (11) weisen jeweils einen Submoduleingang (12) und einen Submodulausgang (13) und dazwischen eine Brückenschaltung (14) mit vier selbstgeführten Halbleiterschaltern (15) und einem Brückenzweig (16) auf. In dem Brückenzweig (16) ist jeweils ein Speicherkondensator (17) angeordnet. Die Halbleiterschalter (15) der Submodule (11) sind jeweils unabhängig von den Halbleiterschaltern (15) der anderen Submodule (11) desselben Hauptmoduls (5) und der anderen Hauptmodule (5) schaltbar.

FIG 1

EP 2 947 766 A1

**Beschreibung**

Die vorliegende Erfindung betrifft eine Stromversorgungseinrichtung für eine nichtlineare Last.

Derartige Stromversorgungseinrichtungen sind allgemein bekannt. Rein beispielhaft wird auf die DE 10 2008 049 610 A1 bzw. die hiermit korrespondierende US 2011/0 176 575 A1 verwiesen.

Aus der Dissertation "Untersuchung der Steuerung für Matrixumrichter und Entwicklung eines neuen Verfahrens zur Reduzierung der Gleichkomponente bei der Raumvektormodulation" von Bernhard Klug, eingereicht bei der Fakultät für Maschinenbau, Elektrotechnik und Wirtschaftsingenieurwesen der Brandenburgischen Technischen Universität Cottbus, sind verschiedene Matrixumrichter und Steuerverfahren für diese Matrixumrichter bekannt. Im Rahmen der Dissertation werden die Umrichter zur Ansteuerung einer elektrischen Maschine verwendet.

Nichtlineare Lasten benötigen oftmals Filter und andere Kompensatoren wie beispielsweise SVC (static VAR compensator) oder STATCOM (static compensator), um Netzrückwirkungen zu reduzieren bzw. in einem tolerierbaren Rahmen zu halten.

Bei der aus der DE 10 2008 049 610 A1 bekannten Stromversorgungseinrichtung wird die nichtlineare Last über einen Zwischenkreisumrichter aus dem mehrphasigen Drehstromnetz gespeist. Der Zwischenkreisumrichter weist eine Anzahl von Umrichterelementen auf, die jeweils aus einer mehrstufigen Reihenschaltung von Submodulen bestehen. Die Submodule weisen jeweils einen Speicherkondensator und mindestens zwei selbstgeführte Halbleiterschalter auf. Die Halbleiterschalter der einzelnen Submodule sind unabhängig von den Halbleiterschaltern der anderen Submodule schaltbar, so dass der Speicherkondensator des jeweiligen Submoduls mittels der Halbleiterschalter des jeweiligen Submoduls je nach deren Schaltzustand überbrückt oder aktiv ist.

Mit dieser Stromversorgungseinrichtung ist es insbesondere möglich, die Frequenz, mit welcher die nichtlineare Last gespeist wird, unabhängig von der Frequenz des Drehstromnetzes zu wählen. Weiterhin können Netzrückwirkungen in erheblichem Umfang begrenzt werden.

Die Aufgabe der vorliegenden Erfindung besteht darin, eine Stromversorgungseinrichtung für eine nichtlineare Last zu schaffen, bei welcher die Netzrückwirkungen nahezu vollständig eliminiert werden können, die Energieeffizienz bei der Versorgung der nichtlinearen Last erhöht wird und insbesondere im Falle eines Lichtbogenofens der Schmelzvorgang durch ein ruhigeres Brennen der Lichtbögen beschleunigt werden kann.

Die Aufgabe wird durch eine Stromversorgungseinrichtung mit den Merkmalen des Anspruchs 1 gelöst. Vorteilhafte Ausgestaltungen der Stromversorgungseinrichtung sind Gegenstand der abhängigen Ansprüche 2 bis 12.

Erfindungsgemäß wird eine Stromversorgungseinrichtung für eine nichtlineare Last dadurch geschaffen,

- dass die Stromversorgungseinrichtung eine Mehrzahl an Umrichtereinheiten aufweist,
- dass die Umrichtereinheiten jeweils eine Mehrzahl an Hauptmodulen aufweisen,
- dass die Hauptmodule jeweils einen Eingangsanschluss aufweisen, der jeweils mit einer Phase eines mit einer Betriebsfrequenz betriebenen mehrphasigen Drehstromnetzes verbunden ist,
- dass die Umrichtereinheiten jeweils einen gemeinsamen Sternpunkt aufweisen, der einerseits mit einem jeweiligen Ausgang der Hauptmodule der jeweiligen Umrichtereinheit und andererseits über einen Ausgangsanschluss der jeweiligen Umrichtereinheit mit der nichtlinearen Last verbunden ist,
- dass die Hauptmodule jeweils eine Reihenschaltung einer Koppelinduktivität und einer Mehrzahl an Submodulen aufweisen,
- dass die Submodule jeweils einen Submoduleingang und einen Submodulausgang und zwischen dem jeweiligen Submoduleingang und dem jeweiligen Submodulausgang eine Brückenschaltung mit vier selbstgeführten Halbleiterschaltern und einem Brückenzweig aufweisen, in dem jeweils ein Speicherkondensator angeordnet ist, und
- dass die Halbleiterschalter der Submodule jeweils unabhängig von den Halbleiterschaltern der anderen Submodule desselben Hauptmoduls und der anderen Hauptmodule schaltbar sind.

Durch diese Maßnahmen wird insbesondere erreicht, dass eine Betriebsfrequenz der nichtlinearen Last von der Betriebsfrequenz des Drehstromnetzes verschieden ist. Insbesondere kann die Betriebsfrequenz der nichtlinearen Last größer als die Betriebsfrequenz des Drehstromnetzes sein. Dadurch wird beispielsweise bei einem Lichtbogenofen erreicht, dass ein unterbrochener Lichtbogen sehr schnell wieder zündet und ruhig brennt. Weiterhin kann insbesondere die Produktivität erhöht werden. Aufgrund der Ausgestaltung der Hauptmodule als Multilevel-Stränge können weiterhin Netzrückwirkungen nahezu vollständig eliminiert werden. Die Betriebsfrequenz der nichtlinearen Last kann beispielsweise zwischen 70 Hz und 200 Hz liegen. Sie kann alternativ im Betrieb konstant sein oder im Betrieb in Abhängigkeit vom Betriebszustand der nichtlinearen Last variiert werden. Beispielsweise kann im Falle eines Lichtbogenofens als nichtlineare Last die Betriebsfrequenz in Abhängigkeit von der Lichtbogenspannung und dem Lichtbogenstrom eingestellt werden.

Minimal sind zwei Umrichtereinheiten vorhanden. Vorzugsweise ist die Anzahl an Umrichtereinheiten jedoch mindestens drei. Dies gilt insbesondere dann, wenn die nichtlineare Last eine Drehstromlast ist. Insbesondere ist die Anzahl an Umrichtereinheiten in diesem Fall vorzugsweise gleich der Anzahl an Phasen der nichtlinearen Last.

Weiterhin weist jede Umrichtereinheit minimal zwei Hauptmodule auf. Vorzugsweise ist jedoch auch die Anzahl an Hauptmodulen je Umrichtereinheit mindestens drei. Insbesondere ist die Anzahl an Hauptmodulen je Umrichtereinheit vorzugsweise gleich der Anzahl an Phasen des Drehstromnetzes. Durch diese Ausgestaltungen kann die Belastung des Drehstromnetzes in besonders großem Umfang vergleichmäßigt werden.

Üblicherweise - aber nicht notwendigerweise - beträgt die Anzahl an Phasen bei Drehstromnetzen drei. Wenn in einem derartigen Fall nur zwei Umrichtereinheiten vorhanden sind, ist die nichtlineare Last eine einphasige Wechselstromlast oder eine zweiphasige Drehstromlast. Wenn in diesem Fall jede Umrichtereinheit nur zwei Hauptmodule aufweist, ist in der Regel eine Phase des Drehstromnetzes mit je einem der beiden Hauptmodule der beiden Umrichtereinheiten verbunden. Die beiden anderen Phasen des Drehstromnetzes sind üblicherweise mit jeweils dem anderen Hauptmodul der beiden Umrichtereinheiten verbunden. Wenn hingegen in diesem Fall zwar nur zwei Umrichtereinheiten vorhanden sind, aber jede Umrichtereinheit drei Hauptmodule aufweist, ist jede Phase des Drehstromnetzes pro Umrichtereinheit mit je einem von deren Hauptmodulen verbunden. Wenn drei Umrichtereinheiten vorhanden sind, ist die nichtlineare Last eine Drehstromlast. Wenn in diesem Fall jede Umrichtereinheit nur zwei Hauptmodule aufweist, ist in der Regel jede Phase des Drehstromnetzes mit zwei Hauptmodulen verbunden, wobei die beiden Hauptmodule, mit denen die jeweilige Phase verbunden ist, jeweils in verschiedenen Umrichtereinheiten angeordnet sind. Wenn sowohl drei Umrichtereinheiten vorhanden sind als auch jede Umrichtereinheit drei Hauptmodule aufweist, ist jede Phase des Drehstromnetzes pro Umrichtereinheit mit je einem von deren Hauptmodulen verbunden.

Die nichtlineare Last kann nach Bedarf ausgebildet sein. In vielen Fällen ist die nichtlineare Last als Lichtbogenofen mit vorgeordnetem Ofentransformator ausgebildet. In diesem Fall sind die Ausgangsanschlüsse der Umrichtereinheiten mit der Primärseite des Ofentransformators verbunden. Zwischen den Ausgangsanschlüssen der Umrichtereinheiten und der Primärseite des Ofentransformators sind in diesem Fall also - mit Ausnahme von Schalteinrichtungen, die keinerlei Spannungsumsetzung, Filterung oder sonstige Veränderungen vornehmen - sowie eventuell primärseitig des Ofentransformators angeordneten Vordrosseln keinerlei weitere Elemente angeordnet. Die Vordrosseln können, falls sie vorhanden sind, in den Ofentransformator integriert sein oder außerhalb des Ofentransformators angeordnet sein. Lichtbogenöfen werden beispielsweise zum Einschmelzen von Schrott im Rahmen der Stahlerzeugung oder auch zum anderweitigen Einschmelzen von metallhaltigem Material verwendet.

Durch die erfindungsgemäße Ausgestaltung der Stromversorgungseinrichtung kann die an der Primärseite des Ofentransformators anstehende Spannung nach Bedarf eingestellt werden. Es ist daher möglich, dass der Ofentransformator keine Stufenschalter (on load tap changer) aufweist. Dennoch kann eine für den Betrieb erforderliche sekundärseitige Spannung eingestellt werden, da hierfür lediglich eine entsprechende Ansteuerung der Umrichtereinheiten bzw. der Halbleiterschalter der Submodule erfolgen muss.

Vorzugsweise ist vorgesehen, dass sekundärseitig des Ofentransformators anstehende Spannungen und sekundärseitig des Ofentransformators fließende Ströme erfasst werden, dass in Abhängigkeit von den sekundärseitig des Ofentransformators erfassten Spannungen und Strömen mittels einer Elektrodenregelung eine Positionsregelung von Elektroden des Lichtbogenofens erfolgt und dass von der Elektrodenregelung Stromsollwerte und/oder Spannungssollwerte für die Umrichtereinheiten ermittelt werden. Dadurch kann eine besonders stabile und zuverlässige Regelung der Lichtbögen des Lichtbogenofens erfolgen.

Es ist möglich, dass die Umrichtereinheiten zwischen ihrem jeweiligen Sternpunkt und ihrem jeweiligen Ausgangsanschluss weder eine Drossel noch einen Kondensator aufweisen. Alternativ ist es möglich, dass die Umrichtereinheiten zwischen ihrem jeweiligen Sternpunkt und ihrem jeweiligen Ausgangsanschluss eine Drossel oder einen Kondensator aufweisen. Es ist sogar möglich, dass die Umrichtereinheiten zwischen ihrem jeweiligen Sternpunkt und ihrem jeweiligen Ausgangsanschluss eine Reihenschaltung einer Drossel und eines Kondensators aufweisen. Welche dieser Ausgestaltungen ergriffen wird, hängt von den Umständen des Einzelfalls ab. Wenn die nichtlineare Last ein Lichtbogenofen ist, wird in der Regel keine Drossel vorhanden sein. Ein Kondensator kann vorhanden sein. Bei anderen nichtlinearen Lasten kommt es auf die Art der nichtlinearen Last an.

Bei einem Lichtbogenofen ergibt sich beispielsweise folgende Problematik: Aufgrund des Aufbaus und der Wirkungsweise eines Lichtbogenofens ist die im Ofenkreis vorhandene Induktivität relativ hoch. Diese Induktivität ergibt sich durch die Umrechnung der Induktivität auf der Sekundärseite des Ofentransformators auf die Primärseite. Um den gewünschten Stromfluss im Lichtbogenofen zu erreichen, muss die Spannung auf der Primärseite des Ofentransformators entsprechend hoch sein. Dies ist mit Nachteilen verbunden. Beispielsweise müssen die Umrichtereinheiten auf eine entsprechend hohe Spannung ausgelegt werden. Durch den Kondensator kann die wirksame Reaktanz auf einen gewünschten Wert eingestellt werden. Kriterien zur Auslegung des Kondensators bzw. allgemein der Drossel und/oder des Kondensators sind die erforderliche Umrichterspannung, die Kurzschlussstrombegrenzung und die Stabilität. Die Reaktanz X ergibt sich allgemein durch die Beziehung

$$X = \frac{(2\pi F)^2 (L + LS) \cdot C - 1}{2\pi FC}$$

In obiger Formel sind X die gewünschte Reaktanz, F die Frequenz, mit welcher die nichtlineare Last betrieben wird, L die Induktivität der Drossel, LS die Induktivität der nichtlinearen Last und C die Kapazität des Kondensators.

In aller Regel ist zwischen den Ausgangsanschlüssen der Umrichtereinheiten und der Last eine erste Schalteinrichtung zum betriebsmäßigen Verbinden und Trennen der Last von den Umrichtereinheiten angeordnet. Die erste Schalteinrichtung kann beispielsweise als sogenannter Häufigkeitsleistungsschalter, als sogenannter Häufigkeitstrennschalter oder als Schütz ausgebildet sein. Derartige Schalteinrichtungen erlauben ein relativ häufiges Schalten, bis in nennenswertem Umfang Verschleiß auftritt, beispielsweise mindestens 100.000 Schaltspiele.

Zusätzlich kann zwischen den Ausgangsanschlüssen der Umrichtereinheiten und der Last eine zweite Schalteinrichtung zum außerplanmäßigen Trennen der Last von den Umrichtereinheiten angeordnet sein. Diese zweite Schalteinrichtung wird im Regelfall nicht betätigt. Sie ist der ersten Schalteinrichtung in der Regel nachgeordnet.

Die zweite Schalteinrichtung weist Zusatzeingänge auf, die mit zumindest einem Teil der Phasen des Drehstromnetzes verbunden sind. Dadurch ist die Last, falls sie außerplanmäßig von den Umrichtereinheiten getrennt ist, über die zweite Schalteinrichtung und deren Zusatzeingänge an den genannten Teil der Phasen anschaltbar. Dadurch kann beispielsweise ein Notbetrieb der nichtlinearen Last aufrechterhalten werden, wenn eine Fehlfunktion der Umrichtereinheiten vorliegt oder eine Wartung der Umrichtereinheiten oder dergleichen erfolgt.

Die Ansteuerung der Halbleiterschalter der Submodule ist als solche bekannt. Sie kann nach verschiedenen Kriterien erfolgen. Beispielsweise ist es möglich, dass die Halbleiterschalter der Submodule von einer Steuereinrichtung derart angesteuert werden, dass an den Ausgangsanschlüssen der Umrichtereinheiten anstehende Lastströme sinusförmig oder nicht sinusförmig sind.

Alternativ oder zusätzlich ist es möglich, dass die Halbleiterschalter der Submodule von einer Steuereinrichtung derart angesteuert werden, dass an den Ausgangsanschlüssen der Umrichtereinheiten anstehende Lastströme gleiche oder voneinander verschiedene Effektivwerte aufweisen. Dadurch kann beispielsweise im Falle eines Lichtbogenofens gezielt auf die Temperaturverteilung im Lichtbogenofen bzw. im Schmelztiegel Einfluss genommen werden.

Weiterhin ist es möglich, dass die Halbleiterschalter der Submodule von einer Steuereinrichtung derart angesteuert werden, dass der nichtlinearen Last zugeführte Lastströme nach Vorgabe auf die Phasen des Drehstromnetzes verteilt werden. Die Vorgabe kann beispielsweise darin bestehen, dass die dem Drehstromnetz entnommenen Netzströme sinusförmig sind und/oder die dem Drehstromnetz entnommenen Netzströme relativ zu in dem Drehstromnetz anstehenden Phasenspannungen einen vorbestimmten Phasenversatz aufweisen. Die Vorgabe kann weiterhin von einem Zustand des Drehstromnetzes beeinflusst werden. Dadurch kann beispielsweise bei Bedarf dem Drehstromnetz gezielt Blindleistung entnommen werden bzw. Blindleistung zugeführt werden. Auch können beispielsweise Oberschwingungen des Drehstromnetzes, die nicht auf den Betrieb der nichtlinearen Last zurückzuführen sind, reduziert werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1      eine Stromversorgungseinrichtung und eine nichtlineare Last,

FIG 2      eine Umrichtereinheit,

FIG 3      ein Hauptmodul,

FIG 4      ein Submodul,

FIG 5      eine als Lichtbogenofen ausgebildete nichtlineare Last mit ihrer Stromversorgungseinrichtung und weiteren Komponenten,

FIG 6      einen ersten Teil für ein Ermittlungsverfahren für einen Stromsollwert eines Hauptmoduls,

FIG 7      einen zweiten Teil für das Ermittlungsverfahren für einen Stromsollwert eines Hauptmoduls,

FIG 8      ein Ermittlungsverfahren für einen Spannungssollwert eines Hauptmoduls und

FIG 9      ein Ermittlungsverfahren für die Schaltzustände von Halbleiterschaltern von Submodulen.

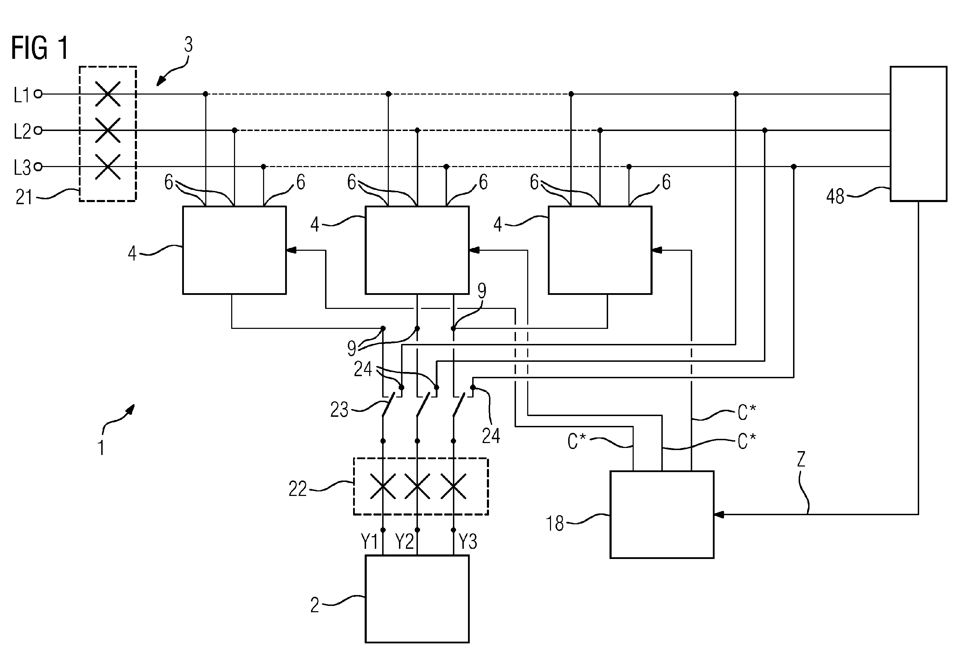

Gemäß FIG 1 soll mittels einer Stromversorgungseinrichtung 1 eine nichtlineare Last 2 aus einem Drehstromnetz 3 mit elektrischer Energie versorgt werden. Das Drehstromnetz 3 wird mit einer Betriebsfrequenz f betrieben. Die Betriebsfrequenz f liegt in der Regel bei 50 Hz oder bei 60 Hz.

Zur Versorgung der nichtlinearen Last 2 mit elektrischer Energie weist die Stromversorgungseinrichtung 1 eine Mehrzahl an Umrichtereinheiten 4 auf. Minimal ist die Anzahl an Umrichtereinheiten 4 zwei. In der Regel ist die Anzahl an Umrichtereinheiten 4 entsprechend der Darstellung in FIG 1 mindestens drei und/oder ist gleich der Anzahl an Phasen der nichtlinearen Last 2.

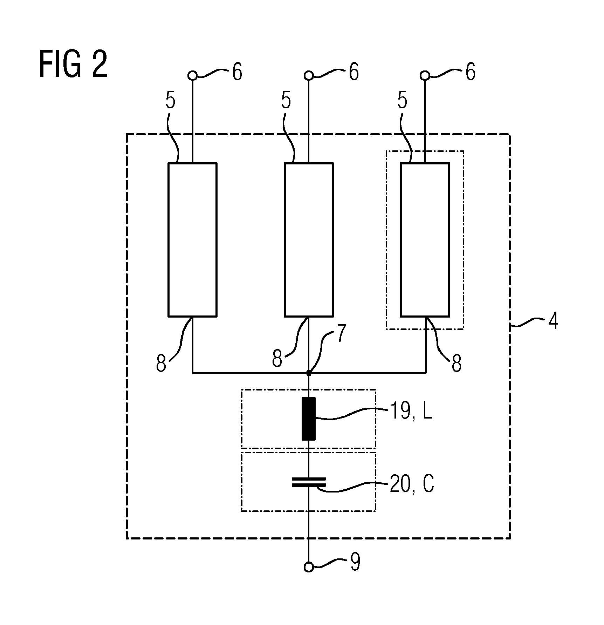

Die Umrichtereinheiten 4 weisen gemäß FIG 2 jeweils eine Mehrzahl an Hauptmodulen 5 auf. Minimal ist die Anzahl an Hauptmodulen 5 je Umrichtereinheit 4 zwei. In der Regel ist die Anzahl an Hauptmodulen 5 entsprechend der Darstellung in FIG 2 mindestens drei und/oder ist gleich der Anzahl an Phasen des Drehstromnetzes 3.

Die Hauptmodule 5 weisen jeweils einen Eingangsanschluss 6 auf. Die Eingangsanschlüsse 6 sind jeweils mit einer Phase des Drehstromnetzes 3 verbunden. Die Eingangsanschlüsse 6 der Hauptmodule 5 einer bestimmten Umrichtereinheit 4 sind gemäß FIG 1 mit verschiedenen Phasen des Drehstromnetzes 3 verbunden, also jeweils mit einer anderen Phase.

Die Umrichtereinheiten 4 weisen weiterhin jeweils einen gemeinsamen Sternpunkt 7 auf. Der Sternpunkt 7 der jeweiligen Umrichtereinheit 4 ist einerseits mit einem jeweiligen Ausgang 8 der Hauptmodule 5 der jeweiligen Umrichtereinheit 4 verbunden. Andererseits ist der Sternpunkt 7 der jeweiligen Umrichtereinheit 4 über einen Ausgangsanschluss 9 der jeweiligen Umrichtereinheit 4 mit der nichtlinearen Last 2 verbunden

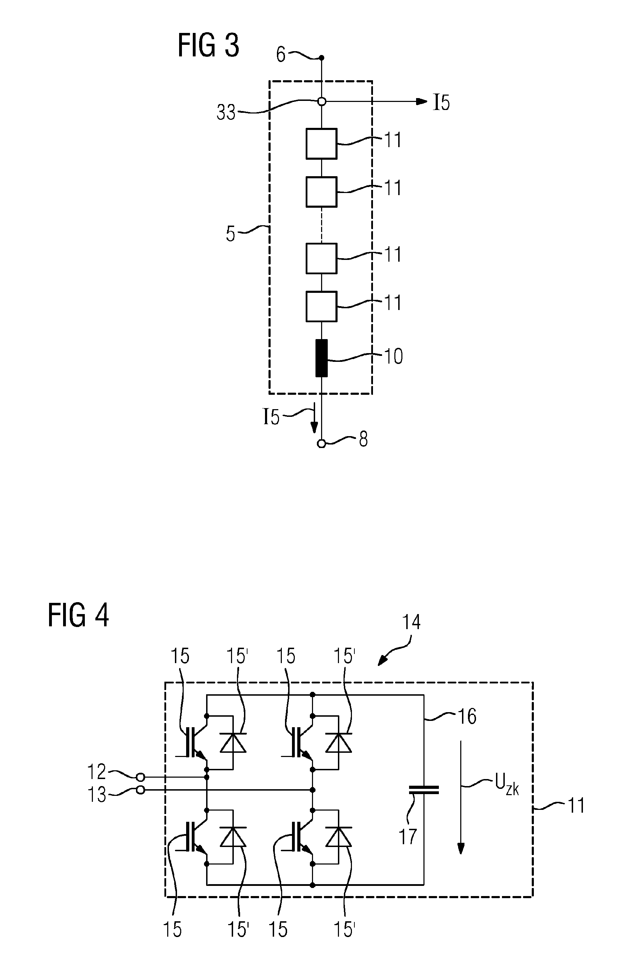

Die Hauptmodule 5 weisen gemäß FIG 3 jeweils eine Reihenschaltung einer Koppelinduktivität 10 und einer Mehrzahl an Submodulen 11 auf. Die Anzahl an Submodulen 11 kann nach Bedarf bestimmt sein. Sie hängt von der Spannung des Drehstromnetzes 3 ab. In der Regel liegt die Anzahl an Submodulen 11 zwischen 10 und 100, beispielsweise zwischen 20 und 50.

Die Submodule 11 weisen gemäß FIG 4 jeweils einen Submoduleingang 12 und einen Submodulausgang 13 auf. Bezüglich unmittelbar aufeinander folgender Submodule 11 ist der Submoduleingang 12 des einen Submoduls 11 mit dem Submodulausgang 13 des anderen Submoduls 11 direkt verbunden.

Die Submodule 11 weisen weiterhin zwischen dem jeweiligen Submoduleingang 12 und dem jeweiligen Submodulausgang 13 eine Brückenschaltung 14 auf. Die Brückenschaltung 14 weist vier selbstgeführte Halbleiterschalter 15 und einen Brückenzweig 16 auf. In dem Brückenzweig 16 ist ein Speicherkondensator 17 angeordnet. Den Halbleiterschaltern 15 ist jeweils - intrinsisch oder separat - eine Freilaufdiode 15' parallel geschaltet. Anstelle der Halbleiterschalter 15 (einschließlich der parallel geschalteten Freilaufdioden 15') könnten jeweils auch Serien- oder Parallelschaltungen von Halbleiterschaltern 15 (jeweils einschließlich einer parallel geschalteten Freilaufdiode 15') verwendet werden.

Der Begriff "selbstgeführt" hat für den Fachmann eine feste Bedeutung. Er bedeutet, dass die Halbleiterschalter 15 durch Ansteuersignale C*, die den Halbleiterschaltern 15 von außen zugeführt werden, sowohl zuschaltbar als auch abschaltbar sind. Beispiele derartiger Halbleiterschalter sind IGBTs, IEGTs, IGCTs oder GTO-Thyristoren. Der Begriff "selbstgeführt" steht im Gegensatz zum Begriff "netzgeführt". Dieser Begriff bedeutet, dass das jeweilige Schaltelement zwar durch ein von außen zugeführtes Steuersignal gezielt zugeschaltet werden kann, jedoch nicht durch ein von außen zugeführtes Steuersignal abgeschaltet werden kann. Das Abschalten erfolgt beispielsweise durch eine Invertierung der über dem netzgeführten Halbleiterschalterelement abfallenden Spannung. Ein Beispiel für einen netzgeführten Halbleiterschalter ist ein "normaler" Thyristor.

In der Regel sind - mit Ausnahme technologisch bedingter Schaltpausen, in denen alle vier Halbleiterschalter 15 abgeschaltet sind - jeweils zwei Halbleiterschalter 15 zugeschaltet und abgeschaltet. Es ist möglich, dass die beiden in FIG 4 oberen Halbleiterschalter 15 zugeschaltet und die beiden in FIG 4 unteren Halbleiterschalter 15 abgeschaltet sind. Ebenso ist es möglich, dass die beiden in FIG 4 unteren Halbleiterschalter 15 zugeschaltet und die beiden in FIG 4 oberen Halbleiterschalter 15 abgeschaltet sind. In diesen beiden Fällen ist der Submoduleingang 12 des entsprechenden Submoduls 11 direkt mit dem Submodulausgang 13 des entsprechenden Submoduls 11 verbunden. Alternativ können die Halbleiterschalter 15 kreuzweise zugeschaltet bzw. abgeschaltet sein. Je nachdem, ob der in FIG 4 linke obere und rechte untere Halbleiterschalter 15 zugeschaltet sind oder ob der in FIG 4 rechte obere und linke untere Halbleiterschalter 15 zugeschaltet sind, fließt ein am jeweiligen Submoduleingang 12 fließender Strom 15 (siehe FIG 3) mit positiver oder negativer Stromrichtung über den jeweiligen Speicherkondensator 17.

Die Halbleiterschalter 15 der Submodule 11 werden gemäß FIG 1 von einer Steuereinrichtung 18 gesteuert. Für jeden Halbleiterschalter 15 jedes Submoduls 11 ermittelt die Steuereinrichtung 18 jeweils ein eigenes Ansteuersignal C*. Die Halbleiterschalter 15 der Submodule 11 sind somit jeweils unabhängig von den Halbleiterschaltern 15 der anderen Submodule 11 derselben Hauptmoduls 5 oder der anderen Hauptmodule 5 derselben Umrichtereinheit 4 oder der Hauptmodule 5 einer anderen Umrichtereinheit 4 schaltbar.

Es ist entsprechend der Darstellung in FIG 2 möglich, dass die Umrichtereinheiten 4 zwischen ihrem jeweiligen Sternpunkt 7 und ihrem jeweiligen Ausgangsanschluss 9 eine Drossel 19 oder einen Kondensator 20 aufweisen. Im Unterschied zur Koppelinduktivität 10, die gemäß FIG 3 Bestandteil des jeweiligen Hauptmoduls 5 ist, ist die Drossel 19, sofern sie vorhanden ist, einheitlich für alle Hauptmodule 5 der jeweiligen Umrichtereinheit 4 wirksam. Alternativ ist es möglich, dass weder die Drossel 19 noch der Kondensator 20 vorhanden sind. Wiederum alternativ ist es möglich, die Umrichtereinheiten 4 zwischen ihrem jeweiligen Sternpunkt 7 und ihrem jeweiligen Ausgangsanschluss 9 eine Reihenschaltung der Drossel 19 und des Kondensators 20 aufweisen.

Die Stromversorgungseinrichtung 1 weist gemäß FIG 1 in der Regel eingangsseitig eine Schalteinrichtung 21 auf. Mittels der Schalteinrichtung 21 kann die gesamte Stromversorgungseinrichtung 1 einschließlich aller nachgeordneter Komponenten (insbesondere der nichtlinearen Last 2) vom Drehstromnetz 3 getrennt werden. Die Schalteinrichtung 21 kann nach Bedarf ausgebildet sein.

In der Regel weist die Stromversorgungseinrichtung 1 weiterhin zwischen den Ausgangsanschlüssen 9 der Umrichtereinheiten 4 und der nichtlinearen Last 2 eine weitere Schalteinrichtung 22 auf, nachfolgend erste Schalteinrichtung 22 genannt. Falls die erste Schalteinrichtung 22 vorhanden ist, dient sie zum betriebsmäßigen Verbinden und Trennen der nichtlinearen Last 2 von den Umrichtereinheiten 4. Die erste Schalteinrichtung 22 kann insbesondere als sogenannter Häufigkeitsleistungsschalter, als sogenannter Häufigkeitstrennschalter oder als Schütz ausgebildet sein.

In manchen Fällen ist zusätzlich zur ersten Schalteinrichtung 22 zwischen den Ausgangsanschlüssen 9 und der nichtlinearen Last 2 keine weitere Schalteinrichtung vorhanden. In manchen Fällen ist jedoch eine derartige weitere Schalteinrichtung 23 vorhanden, nachfolgend zur Unterscheidung von der ersten Schalteinrichtung 22 als zweite Schalteinrichtung 23 bezeichnet. Die zweite Schalteinrichtung 23 wird im Normalbetrieb der Stromversorgungseinrichtung 1 nicht betätigt. Sie bleibt also stets geschlossen. Die zweite Schalteinrichtung 23 dient zum außerplanmäßigen Trennen der nichtlinearen Last 2 von den Umrichtereinheiten 4. Falls die zweite Schalteinrichtung 23 vorhanden ist, ist sie in der Regel der ersten Schalteinrichtung 22 nachgeordnet.

Falls die zweite Schalteinrichtung 23 vorhanden ist, kann sie - insoweit analog zu den Schalteinrichtungen 21, 22 - als einfacher Schalter ausgebildet sein, mittels dessen die nichtlineare Last 2 entweder mit den Umrichtereinheiten 4 verbunden oder von ihnen getrennt wird. Vorzugsweise weist die zweite Schalteinrichtung 23 jedoch Zusatzeingänge 24 auf. Die Anzahl an Zusatzeingängen 24 korrespondiert mit der Anzahl an Phasen der nichtlinearen Last 2. Die Zusatzeingänge 24 sind jeweils mit einer Phase des Drehstromnetzes 3 verbunden. Dadurch ist es möglich, die nichtlineare Last 2 in dem Fall, dass sie außerplanmäßig von den Umrichtereinheiten 4 getrennt ist, über die zweite Schalteinrichtung 23 und deren Zusatzeingänge 24 an die entsprechenden Phasen des Drehstromnetzes 3 anzuschalten. Dadurch kann ein Notbetrieb der nichtlinearen Last 2 - allerdings in diesem Fall zwangsweise bei der Betriebsfrequenz f des Drehstromnetzes 3 - aufrechterhalten werden.

Für jede der Schalteinrichtungen 21, 22, 23 ist es möglich, dass die entsprechende Schalteinrichtung 21, 22, 23 manuell betätigt wird. Ebenso ist es für jede der Schalteinrichtungen 21, 22, 23 möglich, dass die entsprechende Schalteinrichtung 21, 22, 23 von der Steuereinrichtung 18 betätigt wird. Welche Schalteinrichtung 21, 22, 23 auf welche Weise betätigt wird, liegt im Belieben des Fachmanns.

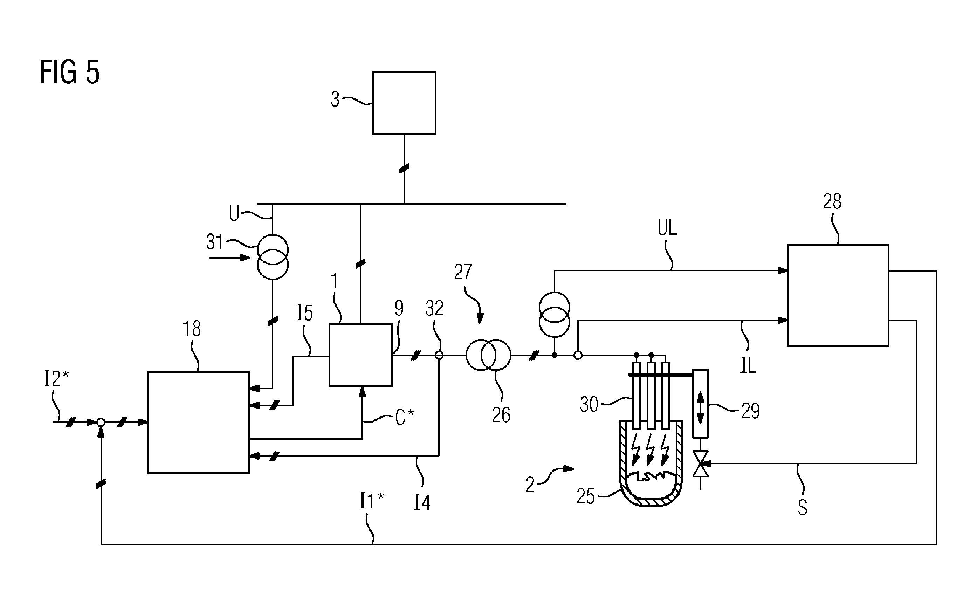

FIG 5 zeigt (unter anderem) eine bevorzugte Ausgestaltung der nichtlinearen Last 2. Gemäß FIG 5 ist die nichtlineare Last 2 als Lichtbogenofen 25 mit vorgeordnetem Ofentransformator 26 ausgebildet. Mittels des Ofentransformators 26 wird eine primärseitig des Ofentransformators 26 anstehende Mittelspannung auf eine sekundärseitig des Ofentransformators 26 abgegebene Niederspannung transformiert. Die Mittelspannung liegt in der Regel bei 10 kV oder bei 35 kV, in manchen Fällen auch bei einem Wert dazwischen oder geringfügig unterhalb von 10 kV oder oberhalb von 35 kV. In seltenen Einzelfällen kann die Mittelspannung auch deutlich höher als 35 kV sein. In ganz seltenen Einzelfällen kann anstelle der Mittelspannung eine Hochspannung verwendet werden. Die Hochspannung kann beispielsweise bei ca. 65 kV bis ca. 70 kV liegen oder sogar bei ca. 110 kV bis ca. 115 kV liegen. Die Niederspannung liegt in der Regel zwischen mehreren 100 V und 2 kV. Beispielsweise kann sie bei ca. 500 V bis ca. 1500 V liegen. Die Ausgangsanschlüsse 9 der Umrichtereinheiten 4 sind gemäß FIG 5 direkt mit der Primärseite 27 des Ofentransformators 26 verbunden. Lediglich die erste Schalteinrichtung 22 und gegebenenfalls auch die zweite Schalteinrichtung 23 sind vorhanden. Es erfolgt also zwischen den Ausgangsanschlüssen 9 und dem Ofentransformator 26 keine Spannungsumsetzung oder dergleichen.

Mittels der Umrichtereinheiten 4 können Spannungs- und Stromwerte nach Bedarf eingestellt werden. Es ist daher lediglich durch entsprechende Ansteuerung der Umrichtereinheiten 4 - genauer: der Halbleiterschalter 15 der Submodule 11 - möglich, unabhängig von Spannungsschwankungen des Drehstromnetzes 3 die dem Ofentransformator 26 zugeführte primärseitige Spannung nach Bedarf einzustellen. Es ist daher nicht erforderlich, dass der Ofentransformator 26 primärseitig und/oder sekundärseitig Stufenschalter aufweist.

Im Übrigen kann der Ofentransformator 26 nach Bedarf ausgelegt sein. Er kann insbesondere auf die gewünschte Betriebsfrequenz F des Lichtbogenofens 25, also eine Frequenz insbesondere oberhalb der Betriebsfrequenz f des Drehstromnetzes 3, ausgelegt und dimensioniert sein.

Gemäß FIG 5 werden sekundärseitig des Ofentransformators 26 dort anstehende Spannungen UL und dort fließende Ströme IL erfasst. Die erfassten Spannungen UL und Ströme IL werden einer Elektrodenregelung 28 zugeführt. Die Elektrodenregelung 28 ermittelt anhand dieser Werte UL, IL eine Stellgröße S für eine Verstelleinrichtung 29. Dadurch wird eine Position von Elektroden 30 des Lichtbogenofens 25 nachgeführt. Es erfolgt also in Abhängigkeit von den sekundärseitig des Ofentransformators 26 erfassten Spannungen UL und Strömen IL eine Positionsregelung der Elektroden 30. Die Verstelleinrichtung 29 kann beispielsweise als Hydraulikzylindereinheit ausgebildet sein.

Weiterhin ermittelt die Elektrodenregelung 28 für jede Phase des Lichtbogenofens 25 in Abhängigkeit von den sekundärseitig des Ofentransformators 26 erfassten Spannungen UL und Strömen IL Stromsollwerte I1* für die Umrichtereinheiten 4 und übermittelt sie an die Steuereinrichtung 18. Alternativ oder zusätzlich zu den Stromsollwerten I1* kann die Elektrodenregelung 28 in Abhängigkeit von den sekundärseitig des Ofentransformators 26 erfassten Spannungen UL und Strömen IL Spannungssollwerte für die Umrichtereinheiten 4 ermitteln und an die Steuereinrichtung 18 übermitteln.

FIG 5 zeigt weiterhin einige nachfolgend näher erläuterte Ausgestaltungen der Stromversorgungseinrichtung 1. Diese Ausgestaltungen sind in FIG 5 in Verbindung mit der Ausgestaltung der nichtlinearen Last 2 als Lichtbogenofen 25 mit vorgeordnetem Ofentransformator 26 dargestellt. Diese Ausgestaltungen sind jedoch auch dann möglich, wenn die nichtlineare Last 2 anders ausgestaltet ist.

Gemäß FIG 5 wird - beispielsweise über einen Messtransformator 31 - die Versorgungsspannung U des Drehstromnetzes 3 erfasst und der Steuereinrichtung 18 zugeführt. Weiterhin werden mittels Stromsensoren 32 die von den Umrichtereinheiten 4 abgegebenen Ströme 14 erfasst und ebenfalls der Steuereinrichtung 18 zugeführt. Schließlich werden - siehe FIG 3 -mittels weiterer Stromsensoren 33 die in den Hauptmodulen 5 fließenden Ströme 15 erfasst und der Steuereinrichtung 18 zugeführt. Schließlich kann der Steuereinrichtung 18 zusätzlich zu den Stromsollwerten I1* pro Phase des Drehstromnetzes 3 und/oder der nichtlinearen Last 2 jeweils noch ein weiterer Stromsollwert I2* zugeführt werden. Alternativ oder zusätzlich zu den Stromsollwerten I2* kann der Steuereinrichtung 18 pro Phase ein jeweiliger Spannungssollwert zugeführt werden.

In Abhängigkeit von den ihr zugeführten Werten U, 14, 15, I1*, I2* ermittelt die Steuereinrichtung 18 sodann die Ansteuersignale C* für die einzelnen Halbleiterschalter 15 der Submodule 11.

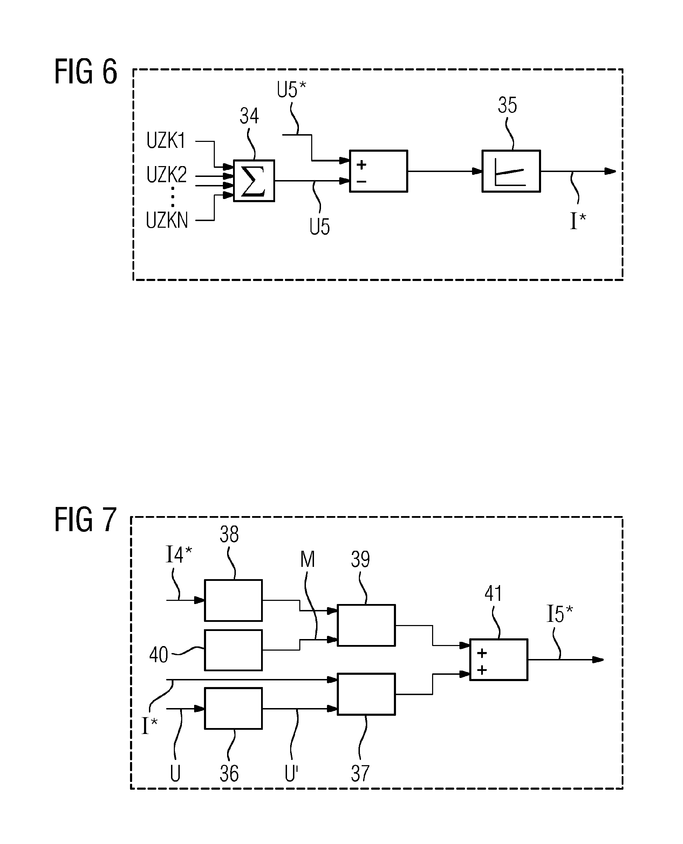

In Verbindung mit den FIG 6 bis 9 wird nachfolgend die Ermittlung der Ansteuersignale C* näher erläutert.

Gemäß FIG 6 werden - bezogen auf eines der Hauptmodule 5 - einem Addierer 34 die Spannungen UZKi der Speicherkondensatoren 17 der Submodule 11 des entsprechenden Hauptmoduls 5 zugeführt. Der Index i durchläuft die Werte von 1 bis N, wobei N die Anzahl an Submodulen 11 des jeweiligen Hauptmoduls 5 ist. Die Spannungen UZKi werden zu diesem Zweck mittels entsprechender Spannungssensoren erfasst.

Der Addierer 34 liefert als Ausgangssignal die Spannung U5 für das entsprechende Hauptmodul 5. Die Spannung U5 wird einem Spannungsregler 35 zugeführt, dem auch ein Spannungssollwert U5* für das entsprechende Hauptmodul 5 zugeführt wird. Der Spannungsregler 35 kann nach Bedarf ausgebildet sein, insbesondere als Regler mit einem Integralanteil. Ein Beispiel eines derartigen Reglers ist ein PI-Regler, also ein Proportional-Integral-Regler. Der Spannungsregler 35 gibt als Stellgröße einen Stromsollwert I* aus.

Der vom Spannungsregler 35 ausgegebene Stromsollwert I* wird zunächst normiert. Zu diesem Zweck wird gemäß FIG 7 in einem Normierer 36 die zu einem bestimmten Zeitpunkt t erfasste Momentanspannung U des Drehstromnetzes 3 auf den Wert 1 normiert. Beispielsweise kann zu diesem Zweck ein normierter Wert U' gemäß der Beziehung

$$U'(t) = \frac{U(t)}{\sqrt{U^2(t) + U^2(t - 1/4f)}}$$

ermittelt werden. Der von dem Normierer 36 ermittelte Wert U' wird in einem Multiplizierer 37 mit dem vom Spannungsregler 35 ausgegebenen Stromsollwert I* multipliziert. Das Ausgangssignal des Multiplizierers 37 weist eine definierte Phasenbeziehung zur Spannung U des Drehstromnetzes 3 auf. Insbesondere kann ein Phasenversatz von 0° (elektrisch) zu derjenigen Phase des Drehstromnetzes 3 bestehen, mit welcher das betreffende Hauptmodul 5 verbunden ist.

Gemäß FIG 7 wird weiterhin in einem Sollwertermittler 38 anhand eines von der jeweiligen Umrichtereinheit 4 abzugebenden Sollstroms I4* ein Anteil für das betreffende Hauptmodul 5 der jeweiligen Umrichtereinheit 4 ermittelt. Der Sollstrom I4* kann beispielsweise durch den Stromsollwert I1* für die entsprechende Phase der nichtlinearen Last 2 bestimmt sein. Gegebenenfalls kann bei der Bestimmung des Sollstroms I4* zusätzlich der Sollstromwert I2* berücksichtigt werden. Im einfachsten Fall erfolgt eine gleichmäßige Aufteilung des Sollstroms I4* auf die Hauptmodule 5 der jeweiligen Umrichtereinheit 4. Es ist jedoch ebenso eine andere Aufteilung möglich. Durch die Aufteilung des Sollstroms I4* auf die Hauptmodule 5 der jeweiligen Umrichtereinheit 4 ist festgelegt, in welchem Umfang welche Phase des Drehstromnetzes 3 durch die jeweilige Umrichtereinheit 4 belastet wird. Prinzipiell ist eine beliebige Vorgabe der Verteilung möglich. Entsprechend dieser Vorgabe werden die der nichtlinearen Last 2 zugeführten Lastströme 14 auf die Phasen des Drehstromnetzes 3 verteilt.

Das Ausgangssignal des Sollwertermittlers 38 wird einem Modulator 39 zugeführt. Dem Modulator 39 wird weiterhin von einem Signalgenerator 40 ein Modulationssignal M zugeführt. Der Modulator 39 moduliert das Ausgangssignal des Sollwertermittlers 38 mit dem Modulationssignal M. Das Ausgangssignal des Modulators 39 wird in einem Addierer 41 mit dem Ausgangssignal des Multiplizierers 37 zu einem resultierenden Sollstrom I5* addiert. Dieser Wert ist der Sollwert I5* für die Stromregelung des entsprechenden Hauptmoduls 5.

Das Modulationssignal M kann nach Bedarf bestimmt sein. Im einfachsten Fall handelt es sich um ein Sinussignal. In diesem Fall sind an den Ausgangsanschlüssen 9 der Umrichtereinheiten 4 anstehende Lastströme 14 sinusförmig. Es ist alternativ möglich, dass das Modulationssignal M nicht sinusförmig ist. In diesem Fall sind an den Ausgangsanschlüssen 9 der Umrichtereinheiten 4 anstehende Lastströme 14 nicht sinusförmig. Die Signalform kann insbesondere in Abhängigkeit von einem Betriebszustand der nichtlinearen Last 2 (beispielsweise des Lichtbogenofens 25) bestimmt und eingestellt werden.

Weiterhin weist das Modulationssignal M - unabhängig von seiner Signalform - vorzugsweise eine Grundfrequenz auf, welche größer als die Betriebsfrequenz f des Drehstromnetzes 3 ist. Es ist ferner möglich, dass die Grundfrequenz des Modulationssignals M in Abhängigkeit von einem Betriebszustand der nichtlinearen Last 2 (beispielsweise des Lichtbogenofens 25) bestimmt und eingestellt wird.

Aus den vorstehenden Ausführungen ist weiterhin ersichtlich, dass die Lastströme 14 der Umrichtereinheiten 4 individuell bestimmt werden können. Es ist daher möglich, dass die Lastströme 14 gleiche Effektivwerte aufweisen. Ebenso ist es jedoch möglich, dass die Lastströme 4 voneinander verschiedene Effektivwerte aufweisen.

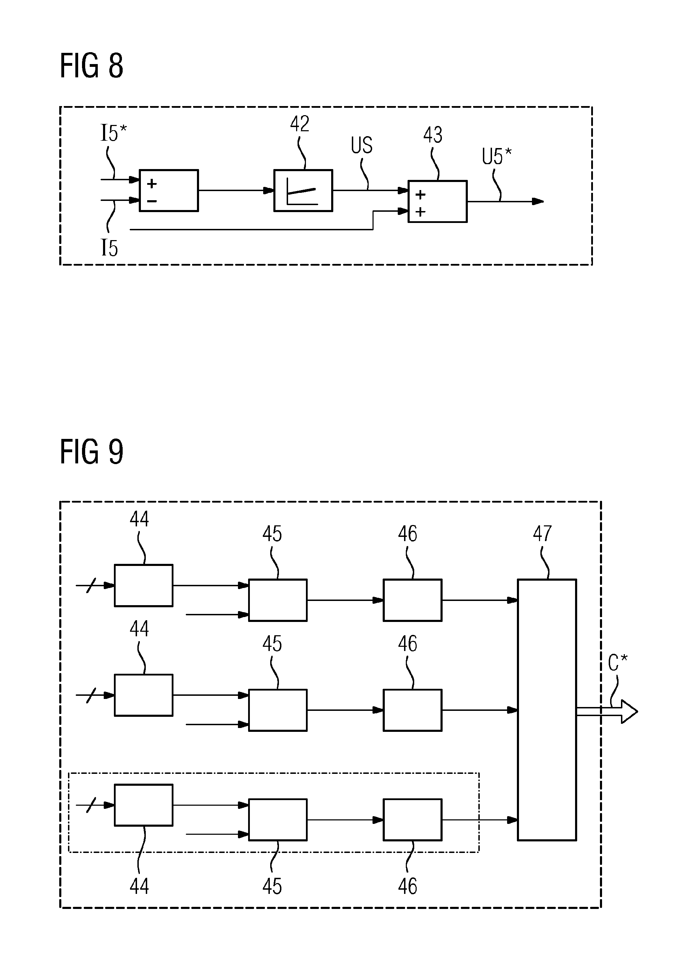

Der im Rahmen der Vorgehensweise von FIG 7 ermittelte resultierende Sollstrom I5* für das jeweilige Hauptmodul 5 wird gemäß FIG 8 einem Stromregler 42 zugeführt. Dem Stromregler 42 wird weiterhin der erfasste Iststrom 15 des jeweiligen Hauptmoduls 5 zugeführt. In Abhängigkeit von den ihm zugeführten Größen I5*, 15 ermittelt der Stromregler 42 ein Spannungsstellsignal US für das entsprechende Hauptmodul 5. Der Stromregler 42 kann insbesondere als Regler mit einem Integralanteil ausgebildet sein, beispielsweise als PI-Regler.

Das Spannungsstellsignal US des Stromreglers 42 wird gemäß FIG 8 einem Addierer 43 zugeführt, in dem zu dem Spannungsstellsignal US der momentane Wert U(t) der an der jeweiligen Phase anliegenden Spannung addiert wird. Diese Addition erfolgt zum Zwecke der Störgrößenkompensation. Das Ausgangssignal des Addierers 43 ist die erforderliche Spannung U5*, welche über den Submodulen 11 des entsprechenden Hauptmoduls 5 in ihrer Gesamtheit abfallen soll.

FIG 9 zeigt die Ermittlung der Ansteuersignale C* für die Halbleiterschalter 15 einer vollständigen Umrichtereinheit 4. Die in FIG 9 mit 44, 45 und 46 bezeichneten Blöcke entsprechen für jeweils für eines der Hauptmodule 5 der entsprechenden Umrichtereinheit 4 den obenstehend in Verbindung mit den FIG 6 bis 8 erläuterten Vorgehensweisen. Gemäß FIG 9 erfolgt die Ermittlung für die Hauptmodule 5 der jeweiligen Umrichtereinheit 4 parallel und unabhängig voneinander. Die ermittelten Spannungen U5* werden einer Ermittlungseinrichtung 47 zugeführt, welche daraus die Ansteuersignale C* für die einzelnen Halbleiterschalter 15 generiert. Diese Generierung ist als solche bekannt und als solche nicht mehr Gegenstand der vorliegenden Erfindung.

Aus den obigen Ausführungen ist ersichtlich, dass die Ströme 15, die von den Hauptmodulen 5 dem Drehstromnetz 3 entnommen werden und der nichtlinearen Last 2 zugeführt werden, unabhängig voneinander bestimmt werden können. Sie können insbesondere derart bestimmt werden, dass die der nichtlinearen Last 2 zugeführten Lastströme 14 nach Vorgabe auf die Phasen des Drehstromnetzes 3 verteilt werden. Dadurch ist es insbesondere möglich, dass die dem Drehstromnetz 3 entnommenen Netzströme sinusförmig sind und/oder die dem Drehstromnetz 3 entnommenen Netzströme relativ zu in dem Drehstromnetz 3 anstehenden Phasenspannungen U einen vorbestimmten Phasenversatz aufweisen, obwohl die nichtlineare Last 2 fluktiert. Der Phasenversatz kann sogar einstellbar sein. Dies kann insbesondere sinnvoll sein, wenn dem Drehstromnetz 3 gezielt die Funktionalität "Blindleistung" zur Verfügung gestellt werden soll. Es ist sogar - siehe FIG 1 -möglich, mittels einer entsprechenden Erfassungseinrichtung 48 einen Zustand Z des Drehstromnetzes 3 zu erfassen und in Abhängigkeit von dem erfassten Zustand Z zu ermitteln, welchen Phasenversatz die dem Drehstromnetz 3 entnommenen Netzströme aufweisen und/oder mit welchen resultierenden Amplituden die dem Drehstromnetz 3 entnommenen Netzströme auf die einzelnen Phasen des Drehstromnetzes 3 verteilt werden sollen. In diesem Fall berücksichtigt die Steuereinrichtung 18 den Zustand Z im Rahmen der Ermittlung des Stromsollwerts I5*. Beispielsweise kann der Zustand Z im Rahmen der Aufteilung des gewünschten Laststroms I4* durch den Sollwertermittler 38 erfolgen. Ergänzend kann eventuell auch eine Berücksichtigung im Rahmen der Generierung des Modulationssignals M durch den Signalgenerator 40 vorgenommen werden.

Die vorliegende Erfindung weist viele Vorteile auf. Insbesondere ist auf einfache und zuverlässige Weise eine nahezu rückwirkungsfreie Entnahme der zur Versorgung der nichtlinearen Last 2 erforderlichen elektrischen Energie aus dem Drehstromnetz 3 möglich.

Zusammengefasst betrifft die vorliegende Erfindung somit folgenden Sachverhalt:

Eine Stromversorgungseinrichtung 1 für eine nichtlineare Last 2 weist eine Mehrzahl an Umrichtereinheiten 4 auf. Die Umrichtereinheiten 4 weisen jeweils mehrere Hauptmodule 5 auf. Die Hauptmodule 5 weisen jeweils einen Eingangsanschluss 6 auf, der jeweils mit einer Phase eines mehrphasigen Drehstromnetzes 3 verbunden ist. Die Umrichtereinheiten 4 weisen jeweils einen gemeinsamen Sternpunkt 7 auf, der einerseits mit einem jeweiligen Ausgang 8 der Hauptmodule 5 der jeweiligen Umrichtereinheit 4 und andererseits über einen Ausgangsanschluss 9 der jeweiligen Umrichtereinheit 4 mit der nichtlinearen Last 2 verbunden ist. Die Hauptmodule 5 weisen jeweils eine Reihenschaltung einer Koppelinduktivität 10 und mehrerer Submodule 11 auf. Die Submodule 11 weisen jeweils einen Submoduleingang 12 und einen Submodulausgang 13 und dazwischen eine Brückenschaltung 14 mit vier selbstgeführten Halbleiterschaltern 15 und einem Brückenzweig 16 auf. In dem Brückenzweig 16 ist jeweils ein Speicherkondensator 17 angeordnet. Die Halbleiterschalter 15 der Submodule 11 sind jeweils unabhängig von den Halbleiterschaltern 15 der anderen Submodule 11 desselben Hauptmoduls 5 und der anderen Hauptmodule 5 schaltbar.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Stromversorgungseinrichtung für eine nichtlineare Last (2),

   - wobei die Stromversorgungseinrichtung eine Mehrzahl an Umrichtereinheiten (4) aufweist,
   - wobei die Umrichtereinheiten (4) jeweils eine Mehrzahl an Hauptmodulen (5) aufweisen,
   - wobei die Hauptmodule (5) jeweils einen Eingangsanschluss (6) aufweisen, der jeweils mit einer Phase eines mit einer Betriebsfrequenz (f) betriebenen mehrphasigen Drehstromnetzes (3) verbunden ist,
   - wobei die Umrichtereinheiten (4) jeweils einen gemeinsamen Sternpunkt (7) aufweisen, der einerseits mit einem jeweiligen Ausgang (8) der Hauptmodule (5) der jeweiligen Umrichtereinheit (4) und andererseits über einen Ausgangsanschluss (9) der jeweiligen Umrichtereinheit (4) mit der nichtlinearen Last (2) verbunden ist,
   - wobei die Hauptmodule (5) jeweils eine Reihenschaltung einer Koppelinduktivität (10) und einer Mehrzahl an Submodulen (11) aufweisen,
   - wobei die Submodule (11) jeweils einen Submoduleingang (12) und einen Submodulausgang (13) und zwischen dem jeweiligen Submoduleingang (12) und dem jeweiligen Submodulausgang (13) eine Brückenschaltung (14) mit vier selbstgeführten Halbleiterschaltern (15) und einem Brückenzweig (16) aufweisen, in dem jeweils ein Speicherkondensator (17) angeordnet ist, und
   - wobei die Halbleiterschalter (15) der Submodule (11) jeweils unabhängig von den Halbleiterschaltern (15) der anderen Submodule (11) desselben Hauptmoduls (5) und der anderen Hauptmodule (5) schaltbar sind.

2. Stromversorgungseinrichtung nach Anspruch 1, **dadurch gekennzeichnet, dass** die Anzahl an Umrichtereinheiten (4) mindestens drei beträgt und/oder dass die Anzahl an Hauptmodulen (5) je Umrichtereinheit (4) mindestens drei beträgt.

3. Stromversorgungseinrichtung nach Anspruch 1 oder 2,
   **dadurch gekennzeichnet, dass** die nichtlineare (2) Last als Lichtbogenofen (25) mit vorgeordnetem Ofentransformator (26) ausgebildet ist und dass die Ausgangsanschlüsse (9) der Umrichtereinheiten (4) mit der Primärseite (27) des Ofentransformators (26) verbunden sind.

4. Stromversorgungseinrichtung nach Anspruch 3, **dadurch gekennzeichnet, dass** der Ofentransformator (26) keine Stufenschalter aufweist.

5. Stromversorgungseinrichtung nach Anspruch 3 oder 4,
   **dadurch gekennzeichnet, dass** sekundärseitig des Ofentransformators (26) anstehende Spannungen (UL) und sekundärseitig des Ofentransformators (26) fließende Ströme (IL) erfasst werden, dass in Abhängigkeit von den sekundärseitig des Ofentransformators (26) erfassten Spannungen (UL) und Strömen (IL) mittels einer Elektrodenregelung (28) eine Positionsregelung von Elektroden (30) des Lichtbogenofens (25) erfolgt und dass von der Elektrodenregelung (28) Stromsollwerte (I1*) und/oder Spannungssollwerte für die Umrichtereinheiten (4) ermittelt werden.

6. Stromversorgungseinrichtung nach einem der obigen Ansprüche,
   **dadurch gekennzeichnet, dass** die Umrichtereinheiten (4) zwischen ihrem jeweiligen Sternpunkt (7) und ihrem jeweiligen Ausgangsanschluss (9) weder eine Drossel (19) noch einen Kondensator (20) aufweisen oder eine Drossel (19) oder einen Kondensator (20) aufweisen oder eine Reihenschaltung einer Drossel (19) und eines Kondensators (20) aufweisen.

7. Stromversorgungseinrichtung nach einem der obigen Ansprüche, **dadurch gekennzeichnet,**

   - **dass** zwischen den Ausgangsanschlüssen (9) der Umrichtereinheiten (4) und der Last (2) eine erste Schalteinrichtung (22) zum betriebsmäßigen Verbinden und Trennen der Last (2) von den Umrichtereinheiten (4) und eine zweite Schalteinrichtung (23) zum außerplanmäßigen Trennen der Last (2) von den Umrichtereinheiten (4) angeordnet sind,
   - **dass** die zweite Schalteinrichtung (23) Zusatzeingänge (24) aufweist, die mit zumindest einem Teil der Phasen des Drehstromnetzes (3) verbunden sind, und
   - **dass** die Last (2), falls sie außerplanmäßig von den Umrichtereinheiten (4) getrennt ist, über die zweite Schalteinrichtung (23) und deren Zusatzeingänge (24) an den Teil der Phasen anschaltbar ist.

8. Stromversorgungseinrichtung nach einem der obigen Ansprüche,
**dadurch gekennzeichnet, dass** die Halbleiterschalter (15) der Submodule (11) von einer Steuereinrichtung (18) derart angesteuert werden, dass an den Ausgangsanschlüssen (9) der Umrichtereinheiten (4) anstehende Lastströme (14) sinusförmig oder nicht sinusförmig sind.

9. Stromversorgungseinrichtung nach einem der obigen Ansprüche,
**dadurch gekennzeichnet, dass** die Halbleiterschalter (15) der Submodule (11) von einer Steuereinrichtung (18) derart angesteuert werden, dass an den Ausgangsanschlüssen (9) der Umrichtereinheiten (4) anstehende Lastströme (14) voneinander verschiedene Effektivwerte aufweisen.

10. Stromversorgungseinrichtung nach einem der obigen Ansprüche,
**dadurch gekennzeichnet, dass** die Halbleiterschalter (15) der Submodule (11) von einer Steuereinrichtung (18) derart angesteuert werden, dass der nichtlinearen Last (2) zugeführte Lastströme (14) nach Vorgabe auf die Phasen des Drehstromnetzes (3) verteilt werden.

11. Stromversorgungseinrichtung nach Anspruch 10,
**dadurch gekennzeichnet, dass** die Vorgabe darin besteht, dass die dem Drehstromnetz (3) entnommenen Netzströme sinusförmig sind und/oder die dem Drehstromnetz (3) entnommenen Netzströme relativ zu in dem Drehstromnetz (3) anstehenden Phasenspannungen einen vorbestimmten Phasenversatz aufweisen.

12. Stromversorgungseinrichtung nach Anspruch 10 oder 11,
**dadurch gekennzeichnet, dass** die Vorgabe von einem Zustand (Z) des Drehstromnetzes (3) beeinflusst wird.

FIG 1

EP 2 947 766 A1

FIG 2

## FIG 3

6

33 ———○——————→ I5

11

11

5

11

11

10

I5 ↓

○ 8

## FIG 4

14

15    15'    15    15'

16

12 ○————
13 ○————

$U_{zk}$

11

17

15    15'    15    15'

FIG 5

FIG 6

FIG 7

## FIG 8

## FIG 9

Europäisches
Patentamt

European
Patent Office

Office européen
des brevets

## EUROPÄISCHER RECHERCHENBERICHT

Nummer der Anmeldung

EP 14 16 8824

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 102 983 735 A (UNIV SHANDONG) 20. März 2013 (2013-03-20) | 1 | INV. H02P27/16 H02M5/27 H02M5/293 H05B6/06 |
| Y | * Zusammenfassung; Abbildungen 1-5 * ----- | 2-12 | |
| Y | WO 2009/139078 A1 (TOKYO INST TECH [JP]; SHIMADA RYUICHI [JP]) 19. November 2009 (2009-11-19) * Zusammenfassung; Abbildungen 1-4 * ----- | 1-12 | |
| Y | US 6 014 323 A (AIELLO MARC F [US] ET AL) 11. Januar 2000 (2000-01-11) * Spalte 1, Zeile 67; Abbildungen 1,5,7 * * Spalte 5, Zeilen 10-14 * ----- | 1-12 | |
| Y | US 2005/083716 A1 (MARQUARDT RAINER [DE]) 21. April 2005 (2005-04-21) * Absätze [0044], [0048], [0061]; Abbildungen 1,5 * ----- | 1-12 | |
| Y | EP 1 729 542 A2 (INDUCTOTHERM CORP [US]) 6. Dezember 2006 (2006-12-06) * Absatz [0015]; Abbildungen 1-3 * ----- | 3-12 | RECHERCHIERTE SACHGEBIETE (IPC) H02P H02M H05B |
| Y | JP 2004 096897 A (FUJI ELECTRIC SYSTEMS CO LTD) 25. März 2004 (2004-03-25) * Zusammenfassung; Abbildung 9 * ----- | 3-12 | |

Der vorliegende Recherchenbericht wurde für alle Patentansprüche erstellt

| Recherchenort | Abschlußdatum der Recherche | Prüfer |
|---|---|---|
| Den Haag | 17. Oktober 2014 | Kanelis, Konstantin |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
..............................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 16 8824

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-10-2014

| Im Recherchenbericht angeführtes Patentdokument | Datum der Veröffentlichung | Mitglied(er) der Patentfamilie | Datum der Veröffentlichung |
|---|---|---|---|
| CN 102983735 A | 20-03-2013 | KEINE | |
| WO 2009139078 A1 | 19-11-2009 | KEINE | |
| US 6014323 A | 11-01-2000 | KEINE | |
| US 2005083716 A1 | 21-04-2005 | AT 306141 T | 15-10-2005 |
| | | DE 10217889 A1 | 13-11-2003 |
| | | DK 1497911 T3 | 19-12-2005 |
| | | EP 1497911 A2 | 19-01-2005 |
| | | JP 2005528870 A | 22-09-2005 |
| | | US 2005083716 A1 | 21-04-2005 |
| | | WO 03090331 A2 | 30-10-2003 |
| EP 1729542 A2 | 06-12-2006 | AU 2006202108 A1 | 21-12-2006 |
| | | BR PI0601940 A | 22-05-2007 |
| | | CA 2549267 A1 | 01-12-2006 |
| | | CN 1874622 A | 06-12-2006 |
| | | EP 1729542 A2 | 06-12-2006 |
| | | JP 5138182 B2 | 06-02-2013 |
| | | JP 2006344596 A | 21-12-2006 |
| | | KR 20060125477 A | 06-12-2006 |
| | | NZ 547339 A | 31-07-2008 |
| | | US 2006289494 A1 | 28-12-2006 |
| | | US 2009314768 A1 | 24-12-2009 |
| JP 2004096897 A | 25-03-2004 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008049610 A1
- US 20110176575 A1